# FASCICULE DE BREVET EUROPEEN

(11) **EP 3 261 893 B1**
(45) Date de publication et mention de la délivrance du brevet: **11.08.2021**
(21) Numéro de dépôt: 16707906.0
(22) Date de dépôt: 12.02.2016
(51) Int. Cl.: B60W 50/14, B60W 40/08

(54) **DISPOSITIF D'AIDE À LA CONDUITE D'UN VÉHICULE EN FONCTION D'UNE ESTIMATION D'AU MOINS UN NIVEAU DE VIGILANCE GLOBALE DU CONDUCTEUR**
VORRICHTUNG ZUR UNTERSTÜTZUNG DER FAHRENS EINES FAHRZEUGS ALS FUNKTION EINER SCHÄTZUNG VON MINDESTENS EINEM NIVEAU DER WACHSAMKEIT INSGESAMT DES FAHRERS
DEVICE FOR AIDING THE DRIVING OF A VEHICLE AS A FUNCTION OF AN ESTIMATION OF AT LEAST ONE LEVEL OF OVERALL VIGILANCE OF THE DRIVER

(30) Priorité: 26.02.2015 FR 1551651
(43) Date de publication de la demande: 03.01.2018
(73) Titulaire: PSA Automobiles SA, 78300 Poissy (FR)
(72) Inventeur: GOURIET, Pascal, 92320 Chatillon (FR)
(86) Numéro de dépôt international: PCT/FR2016/050318
(87) Numéro de publication internationale: WO 2016/135391

(56) Documents cités:
- EP-A1- 2 591 969
- WO-A1-2011/117498
- DE-A1-102011 011 319

## Description

L'invention concerne les véhicules, éventuellement de type automobile, et plus précisément les dispositifs qui permettent d'aider les conducteurs à conduire de tels véhicules.

Plusieurs dispositifs d'aide à la conduite ont déjà été proposés. Ils peuvent être classés en au moins cinq groupes selon le type d'aide qu'ils apportent. Ainsi, un premier groupe comprend les dispositifs qui alertent le conducteur via une interface homme/machine lorsque le temps de conduite a dépassé un seuil choisi (par exemple égal à 2 heures).

Un deuxième groupe comprend les dispositifs qui sont chargés de détecter des signes de perte de vigilance du conducteur, par exemple en fonction des variations de position angulaire du volant.

Un troisième groupe comprend les dispositifs qui sont chargés de détecter des louvoiements anormaux du véhicule sur sa voie de circulation ou des coups de volant donnés par le conducteur lorsque le véhicule est situé à proximité d'une ligne délimitant sa voie de circulation. Ces derniers dispositifs ont besoin de disposer d'images acquises par au moins une caméra numérique devant le véhicule.

Un quatrième groupe comprend les dispositifs qui sont chargés de détecter les signes de distraction et de somnolence sur le visage du conducteur. Ces derniers dispositifs ont besoin d'observer l'état de santé du conducteur, par exemple ses battements de cœur.

Un cinquième groupe comprend les dispositifs qui sont chargés de détecter les signes de fatigue par observation de l'état de santé du conducteur.

Les aides offertes par ces dispositifs sont certes utiles, mais, pour la plupart d'entre elles, elles présentent un taux d'erreur relativement important (tant en surestimation de risque qu'en sous-estimation de risque), du fait qu'elles résultent d'estimées instantanées et non d'un cumul d'estimées instantanées et/ou ne prennent en compte que des effets de l'inattention du conducteur sans prise en compte des causes de cette inattention.

Le document DE 10 2011 011 319 décrit un procédé de contrôle de l'attention du conducteur fondé sur une détection des mouvement du volant.

L'invention a donc notamment pour but d'améliorer la situation, grâce à une prise en compte non seulement des causes de l'inattention du conducteur mais également des effets de l'inattention du conducteur.

Elle propose notamment à cet effet un dispositif, destiné à aider un conducteur à conduire un véhicule pendant une phase de roulage, et comprenant :
- des moyens d'analyse agencés pour détecter, d'une part, au moins une cause d'une inattention du conducteur dans des premières données qui sont représentatives d'un comportement de ce dernier, et, d'autre part, au moins un effet de cette inattention dans des secondes données qui sont représentatives d'images d'une portion d'une voie de circulation située devant le véhicule et sur laquelle circule ce dernier, et
- des moyens de traitement agencés pour estimer au moins un niveau de vigilance globale du conducteur en fonction de chaque cause d'inattention et chaque effet d'inattention déterminés pendant un intervalle de temps choisi, et pour générer un message destiné à être diffusé dans le véhicule et représentatif du niveau de vigilance globale estimé lorsque ce dernier est supérieur à un premier seuil choisi.

Cette prise en compte des causes et des effets de l'inattention du conducteur permet de réduire notablement le taux d'erreur de l'aide offerte au conducteur.

Le dispositif d'aide selon l'invention peut comporter d'autres caractéristiques qui peuvent être prises séparément ou en combinaison, et notamment :
- chaque cause peut être choisie dans un groupe comprenant au moins une distraction et une somnolence ;
- chaque effet peut être choisi dans un groupe comprenant au moins un louvoiement du véhicule et un coup de volant effectué lorsque le véhicule est situé au moins partiellement sur une ligne délimitant la voie de circulation ou à proximité de cette ligne ;
- ses moyens de traitement peuvent être agencés pour estimer chaque niveau de vigilance globale en cumulant des estimées du niveau de vigilance globale concerné pendant des sous-intervalles successifs de l'intervalle de temps choisi ;
- selon l'invention ses moyens de traitement peuvent être agencés pour estimer chaque niveau de vigilance globale en fonction d'une estimée d'un niveau d'effet qui est fonction de chaque effet déterminé, et d'au moins deux estimées de niveaux de cause qui sont fonction respectivement de causes déterminées différentes ; 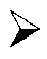 ses moyens de traitement peuvent être agencés pour estimer chaque niveau de vigilance globale en fonction d'une table de correspondance établissant une correspondance entre des niveaux d'effet, des niveaux de cause et des niveaux de vigilance globale ;
- il peut comprendre au moins une caméra numérique propre à acquérir les secondes données d'images, et/ou au moins une caméra numérique propre à acquérir les premières données ;
- ses moyens de traitement peuvent être agencés pour générer un premier message lorsqu'un niveau de vigilance globale estimé est compris entre le premier seuil choisi et un second seuil choisi, et pour générer un second message lorsque le niveau de vigilance globale estimé est supérieur au second seuil choisi.

L'invention propose également un véhicule, éventuellement de type automobile, et comprenant un dispositif d'aide du type de celui présenté ciavant.

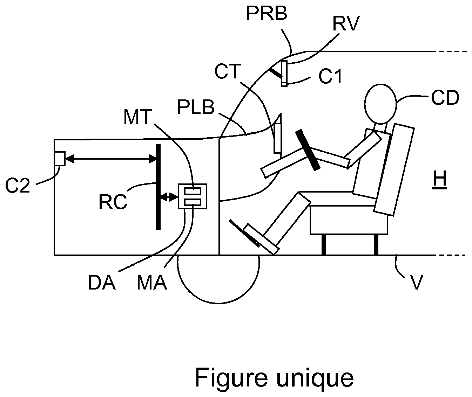

D'autres caractéristiques et avantages de l'invention apparaîtront à l'examen de la description détaillée ci-après, et du dessin annexé, sur lequel l'unique figure illustre schématiquement et fonctionnellement, dans une vue de côté, une partie d'un véhicule automobile équipé d'un exemple de réalisation d'un dispositif d'aide à la conduite selon l'invention.

L'invention a notamment pour but de proposer un dispositif DA destiné à aider un conducteur CD à conduire un véhicule V pendant une phase de roulage.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout type de véhicule pouvant être conduit par un conducteur. Par conséquent, elle concerne les véhicules terrestres, les véhicules fluviaux (ou maritimes), et les véhicules aériens.

On a schématiquement représenté sur l'unique figure un exemple non limitatif de véhicule V conduit par un conducteur CD, installé dans un habitacle H, et équipé d'un dispositif d'aide à la conduite DA selon l'invention.

Comme illustré sur l'unique figure, un dispositif (d'aide à la conduite) DA, selon l'invention, comprend au moins des moyens d'analyse MA et des moyens de traitement MT.

On notera que dans l'exemple de réalisation non limitatif illustré sur l'unique figure, le dispositif DA est un équipement électronique qui est connecté à un réseau de communication RC, éventuellement de type multiplexé, que comprend le véhicule V est qui permet l'échange de données et de commandes entre ces équipements électroniques (et notamment ses calculateurs et certains au moins de ses capteurs). Mais dans une variante de réalisation il pourrait faire partie d'un calculateur (comme par exemple l'ordinateur de bord du véhicule V) ou d'un autre dispositif, comme par exemple un équipement multimédia. Par conséquent, le dispositif DA peut être réalisé sous la forme de modules logiciels (ou informatiques ou encore « software »), ou bien d'une combinaison de circuits électroniques (ou « hardware ») et de modules logiciels.

Les moyens d'analyse MA sont agencés pour détecter, d'une part, au moins une cause d'une inattention du conducteur dans des premières données qui sont représentatives d'un comportement de ce dernier, et, d'autre part, au moins un effet de cette inattention dans des secondes données qui sont représentatives d'images d'une portion d'une voie de circulation située devant le véhicule V et sur laquelle circule ce dernier (V).

Par exemple, chaque cause d'inattention du conducteur peut être choisie parmi au moins une distraction et une somnolence. D'une manière générale, toute cause détectable, relative à un conducteur et susceptible d'engendrer son inattention peut être ici prise en compte.

Egalement par exemple, chaque effet peut être choisi parmi au moins un louvoiement du véhicule V (résultant presque toujours d'une somnolence ou d'une distraction) et un coup de volant effectué par le conducteur lorsqu'il s'aperçoit que son véhicule V est situé au moins partiellement sur une ligne délimitant la voie de circulation empruntée (et résultant également presque toujours d'une somnolence ou d'une distraction). D'une manière générale, tout effet détectable et caractéristique d'une inattention du conducteur peut être ici pris en compte. Ainsi, il pourra, par exemple, s'agir d'un franchissement de ligne sans activation d'un clignotant, ou d'une dérive de trajectoire du véhicule V, ou encore d'un brusque coup de volant donné en réaction pour ramener le véhicule V au centre de sa voie de circulation.

Les premières données sont acquises par au moins une première caméra numérique C1, par exemple installée dans une partie avant du véhicule V (éventuellement dans le bouclier ou parechoc avant, ou dans l'habitacle (éventuellement dans le pied du rétroviseur central RV qui est solidarisé au pare-brise PRB, Ces premières données peuvent, par exemple, être transmises aux moyens d'analyse MA du dispositif DA via le réseau de communication RC.

On notera que la (chaque) première caméra numérique C1 peut éventuellement faire partie du dispositif DA. Mais cela n'est pas obligatoire. En effet, elle(s) pourrai(en)t faire partie d'un autre dispositif embarqué dans le véhicule V, comme par exemple un dispositif de détection d'obstacle situé dans une partie avant du véhicule V.

Les secondes données peuvent, par exemple, être acquises par au moins une seconde caméra numérique C2, installée dans l'habitacle H du véhicule V (éventuellement dans le rétroviseur central RV ou dans une baie montante du pare-brise ou dans le combiné ou encore dans un dispositif central multimédia). Dans ce cas, ces secondes données peuvent, par exemple, être transmises aux moyens d'analyse MA du dispositif DA via le réseau de communication RC.

On notera que la (chaque) seconde caméra numérique C2 peut éventuellement faire partie du dispositif DA. Mais cela n'est pas obligatoire. En effet, elle(s) pourrai(en)t faire partie d'un autre dispositif embarqué dans le véhicule V, comme par exemple un dispositif multimédia.

En variante ou en complément, les premières données peuvent être acquises par au moins un capteur, en particulier un capteur de pression, par exemple implanté dans le volant ou dans une partie du siège conducteur.

On notera également que toute technique connue de l'homme de l'art peut être mise en œuvre, seule ou en combinaison, par les moyens d'analyse MA pour détecter une cause d'inattention. Ainsi, on peut effectuer une analyse de la position de la tête du conducteur CD, ou du clignement des paupières de ce dernier (CD), ou des expressions du visage du conducteur CD, ou encore des variations de la pression exercée par le conducteur CD sur le volant ou sur son siège.

De même, toute technique connue de l'homme de l'art peut être mise en œuvre, seule ou en combinaison, par les moyens d'analyse MA pour détecter un effet d'une inattention. Ainsi, on peut effectuer une comparaison entre images acquises successivement ou une comparaison de chaque image acquise à des images stockées et représentatives d'effets d'inattention caractéristiques.

Les moyens de traitement MT sont agencés pour estimer au moins un niveau de vigilance globale du conducteur en fonction de chaque cause d'inattention et chaque effet d'inattention déterminés par les moyens d'analyse MA pendant un intervalle de temps Δt choisi, et pour générer un message qui est destiné à être diffusé dans le véhicule V et représentatif du niveau de vigilance globale estimé lorsque ce dernier est supérieur à un premier seuil s1 choisi.

Grâce à cette prise en compte des causes et des effets de l'inattention du conducteur CD on peut avantageusement réduire notablement le taux d'erreur de l'aide qui est offerte au conducteur CD par le dispositif DA. Cela résulte en effet de la possibilité de lever des ambiguïtés ou des incertitudes dans certaines situations (tant en surestimation de risque qu'en sous-estimation de risque). On peut en effet désormais accentuer l'importance d'une situation à risque ou éliminer certaines situations qui peuvent être considérées comme des alertes intempestives.

A titre d'exemple, un coup de volant peut être considéré comme une action volontaire du conducteur CD, par exemple en présence d'un obstacle ou d'un défaut de la chaussée, en l'absence de détection d'un signe de distraction ou de somnolence. De même, un louvoiement peut être considéré comme une action volontaire du conducteur CD, par exemple dans une phase d'écart ou de dépassement, en l'absence de détection d'un signe de distraction ou de somnolence.

On notera que cette possibilité de levée d'ambiguïté ou d'incertitude peut être encore renforcée si les moyens de traitement MT sont agencés pour prendre en compte des informations relatives au véhicule V, comme par exemple sa vitesse en cours.

On notera également que les moyens de traitement MT peuvent être agencés pour générer un premier message lorsque le niveau de vigilance globale estimé est compris entre le premier seuil choisi s1 et un second seuil choisi s2 (avec s2 > s1), et pour générer un second message lorsque le niveau de vigilance globale estimé est supérieur au second seuil choisi s2. Le premier message est alors un message d'alerte légère, tandis que le second message est un message d'alerte sévère.

Chaque message peut être de type textuel et/ou image, et dans ce cas il est affiché sur au moins un écran du véhicule V (faisant partie, par exemple, du combiné central de la planche de bord PDB ou du combiné CT du tableau de bord), et/ou de type audio, et dans ce cas il est diffusé par au moins un haut-parleur du véhicule V.

De préférence, les moyens de traitement MT peuvent être agencés pour estimer le (chaque) niveau de vigilance globale en cumulant des estimées du niveau de vigilance globale concerné pendant des sous-intervalles siₖ successifs (avec k = 1 à K) de l'intervalle de temps choisi Δt (Δt = si₁ + si₂ + si_{K}). Cette option permet avantageusement de lever des ambiguïtés ou des incertitudes résultant de l'apparition soudaine d'un niveau de vigilance globale élevé. Par exemple, siₖ est égal à 2 s, Δt est égal à 10 s et K est égal à 5.

Les moyens de traitement MT peuvent être agencés de différentes manières pour estimer le (chaque) niveau de vigilance globale. Ainsi, ils peuvent être agencés pour estimer le (chaque) niveau de vigilance globale en fonction d'une estimée d'un niveau d'effet qui est fonction de chaque effet déterminé (comme par exemple le louvoiement et un coup de volant), et d'au moins deux estimées de niveaux de cause qui sont fonction respectivement de causes déterminées différentes (comme par exemple la distraction et la somnolence).

Dans ce cas, les moyens d'analyse MA peuvent, par exemple, détecter la position du véhicule V par rapport aux lignes délimitant la voie de circulation empruntée parmi les secondes données (d'images), puis déduire de cette détection un signe de louvoiement ou un coup de volant sur une ligne ou à proximité d'une ligne. En parallèle, les moyens d'analyse MA peuvent, par exemple, détecter un signe de distraction ou de somnolence parmi les premières données.

Ensuite, les moyens de traitement MT peuvent, par exemple, estimer un niveau de contrôle latéral du véhicule V par le conducteur CD en fonction du signe de louvoiement ou du coup de volant sur une ligne qui a été déduit. Ce niveau de contrôle latéral peut, par exemple, être compris entre 0% et 100%. En parallèle, les moyens de traitement MT peuvent, par exemple, estimer un niveau de distraction et un niveau de somnolence en fonction du signe de distraction ou de somnolence détecté. Ces niveaux de distraction et de somnolence peuvent, par exemple, être chacun compris entre 0% et 100%.

Dans le cas d'une analyse d'une cause de distraction, un niveau de distraction (compris entre 0 à 100%) peut, par exemple, être obtenu à partir d'une table de correspondance, à partir d'un premier compteur qui évolue dans le temps en fonction des signes de détection de distraction. Une valeur minimale de ce premier compteur est le signe d'un conducteur non distrait et un niveau de distraction de 0% lui est associé pendant un certain temps. Une valeur maximale de ce premier compteur est le signe prolongé d'un conducteur distrait, et un niveau de distraction de 100% lui est associé.

Dans le cas d'une analyse d'une cause de somnolence, un niveau de somnolence (compris entre 0 à 100%) peut, par exemple, être obtenu à partir d'une table de correspondance, à partir d'un deuxième compteur qui évolue dans le temps en fonction des signes de détection de somnolence. Une valeur minimale de ce deuxième compteur est le signe d'un conducteur non vigilant et un niveau de somnolence de 0% lui est associé pendant un certain temps. Une valeur maximale de ce deuxième compteur est le signe prolongé d'un conducteur somnolent, et un niveau de somnolence de 100% lui est associé.

Dans le cas d'une analyse des effets, un niveau de contrôle latéral du véhicule (compris entre 0 à 100%) peut, par exemple, être obtenu à partir d'une table de correspondance, à partir d'un troisième compteur qui évolue dans le temps en fonction des signes de détection des effets. Une valeur minimale de ce troisième compteur est un signe de non louvoiement ou d'absence de coup de volant proche d'une ligne qui a été déduit pendant un certain temps, et un niveau de contrôle latéral du véhicule 0% lui est associé. Une valeur maximale de ce troisième compteur est un signe prolongé de louvoiement ou de coup de volant proche d'une ligne qui a été déduit, et un niveau de contrôle latéral du véhicule de 100% lui est associé.

Ensuite, les moyens de traitement MT peuvent, par exemple, estimer le niveau de vigilance globale en fonction d'une table de correspondance qui établit une correspondance entre des niveaux d'effet, des niveaux de cause et des niveaux de vigilance globale. Cette table de correspondance comprend des données qui sont stockées dans le dispositif DA et qui ont été préalablement obtenues par le constructeur du véhicule V lors de phases de tests en laboratoire ou en usine.

En variante, en fonction des prestations visées au niveau de l'affichage d'information pour le conducteur, les moyens de traitement MT peuvent, par exemple, estimer deux niveaux de vigilance globale, l'un en fonction d'une table de correspondance qui établit une correspondance entre des niveaux d'effet, des niveaux de cause de distraction et des niveaux de vigilance globale, l'autre en fonction d'une table de correspondance qui établit une correspondance entre des niveaux d'effet, des niveaux de cause de somnolence et des niveaux de vigilance globale. Ces tables de correspondance comprennent des données qui sont stockées dans le dispositif DA et qui ont été préalablement obtenues par le constructeur du véhicule V lors de phases de tests en laboratoire ou en usine.

Enfin, les moyens de traitement MT génèrent un message destiné à être diffusé dans le véhicule V et représentatif du niveau de vigilance globale estimé si ce dernier est supérieur au premier seuil choisi s1.

Dans une variante de réalisation, les moyens de traitement MT peuvent être agencés pour estimer un premier niveau de cause en fonction d'une première cause déterminée (comme par exemple la distraction) et de chaque effet déterminé (comme par exemple un louvoiement et un coup de volant), et un second niveau de cause en fonction d'une seconde cause déterminée (comme par exemple la somnolence) et de chaque effet déterminé (comme par exemple un louvoiement et un coup de volant). Dans ce cas, les moyens de traitement MT sont agencés pour estimer le (chaque) niveau de vigilance globale en fonction des premier et second niveaux de cause estimés.

Dans cette variante de réalisation, les moyens d'analyse MA peuvent, par exemple, détecter la position du véhicule V par rapport aux lignes délimitant la voie de circulation empruntée parmi les secondes données (d'images), puis déduire de cette détection un signe de louvoiement ou un coup de volant sur une ligne. En parallèle, les moyens d'analyse MA peuvent, par exemple, détecter un signe de distraction ou de somnolence parmi les premières données.

Ensuite, les moyens de traitement MT peuvent, par exemple, estimer un premier niveau de cause (comme par exemple un niveau de distraction) en fonction du signe de louvoiement ou du coup de volant sur une ligne (ou à proximité d'une ligne) qui a été déduit et d'une éventuelle première cause (comme par exemple un signe de distraction détecté). Ce niveau de distraction peut, par exemple, être compris entre 0% et 100%. En parallèle, les moyens de traitement MT peuvent, par exemple, estimer un second niveau de cause (comme par exemple un niveau de somnolence) en fonction du signe de louvoiement ou du coup de volant sur une ligne qui a été déduit et d'une éventuelle seconde cause (comme par exemple un signe de somnolence détecté). Ce niveau de somnolence peut, par exemple, être compris entre 0% et 100%.

Par exemple, les moyens de traitement MT peuvent être agencés pour estimer le premier niveau de cause (ici le niveau de distraction) en plusieurs sous-étapes. Une première sous-étape peut consister à déterminer une première valeur fonction d'une éventuelle première cause détectée (ici un signe de distraction) et de l'éventuel effet détecté (ici le signe de louvoiement ou le coup de volant sur une ligne).

A titre d'exemple cette première valeur peut être déterminée dans une première table de correspondance qui établit une correspondance entre une première cause (ici le signe de distraction), des effets (ici le signe de louvoiement et le coup de volant sur une ligne) et des premières valeurs. On notera que cette première table de correspondance peut également prendre en compte une information relative au véhicule V, comme par exemple sa vitesse en cours. Un exemple d'une telle première table de correspondance est donné ci-dessous.

| coup de volant | louvoiement | signe de distraction pendant 2 s | première valeur | commentaire |
|---|---|---|---|---|
| non | non | oui (basse vitesse) | +1 | petit incrément du 1er compteur, risque limité |
| non | non | oui (haute vitesse) | +2 | incrément moyen du 1er compteur, risque moyen |
| oui | | oui (basse vitesse) | +1 | petit incrément du 1er compteur, risque limité |
| oui | | oui (haute vitesse) | +4 | fort incrément du 1er compteur, risque fort |
| | oui | oui (basse vitesse) | +1 | petit incrément du 1er compteur, risque limité |
| | oui | oui (haute vitesse) | +4 | fort incrément du 1er compteur, risque fort |
| non | non | non | -1 | petit décrément du 1er compteur, pas de risque |
| oui | | non (basse vitesse) | -1 | petit décrément du 1er compteur, action volontaire du conducteur |
| oui | | non (haute vitesse) | 0 | 1er compteur inchangé, action volontaire du conducteur |
| | oui | non (basse | -1 | petit décrément du 1er |
| | | vitesse) | | compteur, action volontaire du conducteur |
| | oui | non (haute vitesse) | -1 | petit décrément du 1er compteur, action volontaire du conducteur |

Une deuxième sous-étape consiste ensuite à additionner la première valeur déterminée à la valeur d'un premier compteur associé à la première cause (ici la distraction) et résultant de l'addition des K-1 premières valeurs précédemment déterminées dans les K-1 sous-intervalles de temps siₖ précédents. On comprendra que l'on obtient ainsi une nouvelle valeur du premier compteur représentative de la distraction du conducteur CD sur les K sous-intervalles de temps siₖ écoulés (avec k = 1 à K), et donc sur l'intervalle de temps glissant Δt.

Une troisième sous-étape consiste enfin à estimer le premier niveau de cause (ici le niveau de distraction) en fonction de la nouvelle valeur du premier compteur. Pour ce faire, les moyens de traitement MT peuvent, par exemple, utiliser une seconde table de correspondance établissant une correspondance entre des valeurs du premier compteur et des premiers niveaux de cause (ici des niveaux de distraction).

Ces première et seconde tables de correspondance comprennent des données qui sont stockées dans le dispositif DA et qui ont été préalablement obtenues par le constructeur du véhicule V lors de phases de tests en laboratoire ou en usine.

De même, les moyens de traitement MT peuvent être agencés pour estimer le second niveau de cause (ici le niveau de somnolence) en plusieurs sous-étapes. Une première sous-étape peut consister à déterminer une seconde valeur fonction d'une éventuelle seconde cause détectée (ici un signe de somnolence) et de l'éventuel effet détecté (ici le signe de louvoiement ou le coup de volant sur une ligne).

A titre d'exemple cette seconde valeur peut être déterminée dans une première table de correspondance qui établit une correspondance entre une seconde cause (ici le signe de somnolence), des effets (ici le signe de louvoiement et le coup de volant sur une ligne) et des secondes valeurs. On notera que cette première table de correspondance peut également prendre en compte une information relative au véhicule V, comme par exemple sa vitesse en cours. Un exemple d'une telle première table de correspondance est donné ci-dessous.

| coup de volant | louvoiement | signe de somnolence pendant 2 s | seconde valeur | commentaire |
|---|---|---|---|---|
| non | non | oui (basse vitesse) | +1 | petit incrément du 2ème compteur, risque limité |
| non | non | oui (haute vitesse) | +2 | incrément moyen du 2ème compteur, risque moyen |
| oui | | oui (basse vitesse) | +2 | incrément moyen du 2ème compteur, risque moyen |
| oui | | oui (haute vitesse) | +8 | très fort incrément du 2ème compteur, risque très fort |
| | oui | oui (basse vitesse) | +1 | petit incrément du 2ème compteur, risque limité |
| | oui | oui (haute vitesse) | +8 | très fort incrément du 2ème compteur, risque très fort |
| non | non | non | -1 | petit décrément du 2ème compteur, pas de risque |
| oui | | non (basse vitesse) | -1 | petit décrément du 2ème compteur, action volontaire du conducteur |
| oui | | non (haute vitesse) | 0 | 2ème compteur inchangé, action volontaire du conducteur |
| | oui | non (basse vitesse) | -1 | petit décrément du 2ème compteur, action volontaire du conducteur |
| | oui | non (haute vitesse) | -1 | petit décrément du 2ème compteur, action volontaire du conducteur |

Une deuxième sous-étape consiste ensuite à additionner la seconde valeur déterminée à la valeur d'un second compteur associé à la seconde cause (ici la somnolence) et résultant de l'addition des K-1 secondes valeurs précédemment déterminées dans les K-1 sous-intervalles de temps siₖ précédents. On comprendra que l'on obtient ainsi une nouvelle valeur du second compteur représentative de la somnolence du conducteur CD sur les K sous-intervalles de temps siₖ écoulés (avec k = 1 à K), et donc sur l'intervalle de temps glissant Δt.

Une troisième sous-étape consiste enfin à estimer le second niveau de cause (ici le niveau de somnolence) en fonction de la nouvelle valeur du second compteur. Pour ce faire, les moyens de traitement MT peuvent, par exemple, utiliser une seconde table de correspondance établissant une correspondance entre des valeurs du second compteur et des seconds niveaux de cause (ici des niveaux de somnolence).

Ces première et seconde tables de correspondance comprennent des données qui sont stockées dans le dispositif DA et qui ont été préalablement obtenues par le constructeur du véhicule V lors de phases de tests en laboratoire ou en usine.

Ensuite, les moyens de traitement MT peuvent, par exemple, estimer le (chaque) niveau de vigilance globale en fonction d'une troisième table de correspondance qui établit une correspondance entre des premiers niveaux de cause, des seconds niveaux de cause et des niveaux de vigilance globale. Cette troisième table de correspondance comprend des données qui sont stockées dans le dispositif DA et qui ont été préalablement obtenues par le constructeur du véhicule V lors de phases de tests en laboratoire ou en usine.

Enfin, les moyens de traitement MT génèrent un message destiné à être diffusé dans le véhicule V et représentatif du niveau de vigilance globale estimé si ce dernier est supérieur au premier seuil choisi s1.

On notera qu'un message généré par les moyens de traitement MT peut servir à déclencher au moins une action sur le véhicule V, fonction du niveau de vigilance globale associé. Cette action peut être, par exemple, une activation temporaire de l'avertisseur sonore (ou « klaxon ») et/ou des feux de détresse (ou « warning ») à partir d'un seuil minimum d'inattention, un freinage, une réduction progressive d'une vitesse maximale programmée par le conducteur CD, une désactivation de la régulation de vitesse sélectionnée par le conducteur CD, ou une simulation d'une levée du pied de la pédale d'accélérateur, ou une interdiction d'affichage de certaines pages d'informations, ou une variation de l'intensité du signal sonore diffusé par les haut-parleurs du véhicule V, ou une réduction de la température de l'air diffusé dans l'habitacle H, ou une inhibition de certaines commandes du véhicule V, ou une configuration en mode suspension « dur ». Ce type d'action peut être déclenché soit par le dispositif d'aide DA, soit par un autre dispositif embarqué dans le véhicule V.

Dans une variante de réalisation, en fonction des prestations visées d'affichage d'information pour le conducteur, les moyens de traitement MT peuvent être amenés en complément à afficher des messages d'alerte légère et d'alerte sévère. Dans un mode de réalisation non limitatif, des messages d'alerte légère et d'alerte sévère de distraction peuvent être élaborés à partir de dépassements de seuils du premier compteur ou du niveau de cause de distraction, et des messages d'alerte légère et d'alerte sévère de somnolence peuvent être élaborés à partir de dépassements de seuils du deuxième compteur ou du niveau de cause de somnolence.

On notera également que le dispositif d'aide DA peut éventuellement disposer d'une fonction d'auto-apprentissage destinée à adapter son fonctionnement en fonction des phases de roulage antérieures du véhicule et/ou en fonction d'un profil enregistré du conducteur du véhicule (par exemple on peut enregistrer à chaque trajet les habitudes du conducteur (téléphone, type de conduite) et considérer qu'un écart entre ses habitudes et son comportement en cours traduit un signe d'inattention).

On notera également que dans ce qui précède on a décrit un exemple dans lequel on utilise un ou deux niveaux de cause et un niveau d'effet. Mais on peut utiliser plus de deux niveaux de cause (par exemple trois ou quatre) et/ou plus d'un niveau d'effet. Ainsi, on pourrait utiliser un niveau de cause lié à la santé du conducteur et/ou un niveau d'effet lié à l'analyse de la trajectoire du véhicule via des relevés de position de navigation par satellites.

## Revendications

1. Dispositif (DA) pour aider un conducteur à conduire un véhicule (V) pendant une phase de roulage, comprenant :
i) des moyens d'analyse (MA) agencés pour détecter, d'une part, au moins une cause d'une inattention dudit conducteur dans des premières données représentatives d'un comportement de ce dernier, et, d'autre part, au moins un effet de cette inattention dans des secondes données représentatives d'images d'une portion d'une voie de circulation située devant ledit véhicule (V) et sur laquelle circule ce dernier (V), et
ii) des moyens de traitement (MT) agencés pour estimer au moins un niveau de vigilance globale dudit conducteur en fonction de chaque cause d'inattention et chaque effet d'inattention déterminés pendant un intervalle de temps choisi, et pour générer un message destiné à être diffusé dans ledit véhicule (V) et représentatif dudit niveau de vigilance globale estimé lorsque ce dernier est supérieur à un premier seuil choisi ;
et **caractérisé en ce que** lesdits moyens de traitement (MT) sont agencés pour estimer chaque niveau de vigilance globale en fonction d'une estimée d'un niveau d'effet fonction de chaque effet déterminé, et d'au moins deux estimées de niveaux de cause fonction respectivement de causes déterminées différentes.

2. Dispositif selon la revendication 1, **caractérisé en ce que** chaque cause est choisie dans un groupe comprenant une distraction et une somnolence.

3. Dispositif selon l'une des revendications 1 et 2, **caractérisé en ce que** chaque effet est choisi dans un groupe comprenant un louvoiement dudit véhicule (V) et un coup de volant effectué lorsque ledit véhicule (V) est situé au moins partiellement sur une ligne délimitant ladite voie de circulation ou à proximité de cette ligne.

4. Dispositif selon l'une des revendications 1 à 3, **caractérisé en ce que** lesdits moyens de traitement (MT) sont agencés pour estimer chaque niveau de vigilance globale en cumulant des estimées dudit niveau de vigilance globale concerné pendant des sous-intervalles successifs dudit intervalle de temps choisi.

5. Dispositif selon l'une des revendications 1 à 4, **caractérisé en ce que** lesdits moyens de traitement (MT) sont agencés pour estimer chaque niveau de vigilance globale en fonction d'une table de correspondance établissant une correspondance entre des niveaux d'effet, des niveaux de cause et des niveaux de vigilance globale.

6. Dispositif selon l'une des revendications 1 à 5, **caractérisé en ce qu'**il comprend au moins une caméra numérique (C2) propre à acquérir lesdites secondes données d'images, et/ou au moins une caméra numérique (C1) propre à acquérir lesdites premières données.

7. Véhicule (V), **caractérisé en ce qu'**il comprend un dispositif d'aide (DA) selon l'une des revendications précédentes.

## Patentansprüche

1. Vorrichtung (DA) zur Unterstützung eines Fahrers beim Führen eines Fahrzeugs (V) während einer Fahrphase, umfassend:
i) Analysemittel (MA), die so beschaffen sind, dass sie einerseits mindestens eine Ursache für die Unaufmerksamkeit des Fahrers in ersten Daten, die für ein Verhalten des letzteren repräsentativ sind, und andererseits mindestens eine Auswirkung dieser Unaufmerksamkeit in zweiten Daten, die für Bilder eines Abschnitts einer Fahrspur repräsentativ sind, die sich vor dem Fahrzeug (V) befindet und auf der das letztere (V) fährt, erfassen, und
ii) Verarbeitungsmittel (MT), die so beschaffen sind, dass sie mindestens ein Niveau der allgemeinen Wachsamkeit des Fahrers in Abhängigkeit von jeder Ursache der Unaufmerksamkeit und jeder Auswirkung der Unaufmerksamkeit, die während eines gewählten Zeitintervalls bestimmt werden, schätzen und eine Nachricht erzeugen, die dazu bestimmt ist, in dem Fahrzeug (V) ausgestrahlt zu werden, und die für das geschätzte Niveau der allgemeinen Wachsamkeit repräsentativ ist, wenn letztere größer als ein erster gewählter Schwellenwert ist;
und **dadurch gekennzeichnet, dass** die Verarbeitungsmittel (MT) so angeordnet sind, dass sie jeden Pegel der Gesamtwachsamkeit als eine Funktion einer Schätzung eines Effektpegels als eine Funktion jedes bestimmten Effekts und von mindestens zwei Schätzungen von Ursachenpegeln als eine Funktion von jeweils verschiedenen bestimmten Ursachen schätzen.

2. Die Vorrichtung nach Anspruch 1, wobei jede Ursache aus einer Gruppe ausgewählt ist, die Ablenkung und Schläfrigkeit umfasst.

3. Vorrichtung nach einem der Ansprüche 1 und 2, **dadurch gekennzeichnet, dass** jeder Effekt aus einer Gruppe ausgewählt ist, die ein Ausweichen des Fahrzeugs (V) und einen Lenkradhub umfasst, der ausgeführt wird, wenn sich das Fahrzeug (V) zumindest teilweise auf oder in der Nähe einer Linie befindet, die die Verkehrsspur begrenzt.

4. Vorrichtung nach einem der Ansprüche 1 bis 3, **dadurch gekennzeichnet, dass** die Verarbeitungsmittel (MT) so angeordnet sind, dass sie jeden Gesamt-Wachheitsgrad durch Akkumulieren von Schätzungen des betreffenden Gesamt-Wachheitsgrades während aufeinanderfolgender Unterintervalle des ausgewählten Zeitintervalls schätzen.

5. Vorrichtung nach einem der Ansprüche 1 bis 4, **dadurch gekennzeichnet, dass** die Verarbeitungsmittel (MT) so angeordnet sind, dass sie jeden globalen Alertness-Pegel gemäß einer Korrespondenztabelle schätzen, die eine Korrespondenz zwischen Effekt-Pegeln, Ursachen-Pegeln und globalen Alertness-Pegeln herstellt.

6. Vorrichtung nach einem der Ansprüche 1 bis 5, **dadurch gekennzeichnet, dass** sie mindestens eine Digitalkamera (C2), die zur Erfassung der zweiten Bilddaten geeignet ist, und/oder mindestens eine Digitalkamera (C1), die zur Erfassung der ersten Daten geeignet ist, umfasst.

7. Fahrzeug (V), **dadurch gekennzeichnet, dass** es eine Hilfsvorrichtung (DA) nach einem der vorhergehenden Ansprüche umfasst.

## Claims

1. Device (DA) for assisting a driver to drive a vehicle (V) during a driving phase, comprising:
i) analysis means (MA) arranged to detect, on the one hand, at least one cause of inattention of said driver in first data representative of a behaviour of the latter, and, on the other hand, at least one effect of this inattention in second data representative of images of a portion of a traffic lane situated in front of said vehicle (V) and on which the latter (V) is travelling, and
ii) processing means (MT) arranged to estimate at least one level of overall alertness of said driver as a function of each cause of inattention and each effect of inattention determined during a selected time interval, and to generate a message intended to be broadcast in said vehicle (V) and representative of said estimated level of overall alertness when the latter is greater than a first selected threshold;
and **characterised in that** said processing means (MT) are arranged to estimate each level of overall alertness as a function of an estimated level of effect as a function of each determined effect, and of at least two estimated levels of cause as a function of different determined causes respectively.

2. The device of claim 1, wherein each cause is selected from a group comprising distraction and drowsiness.

3. A device according to any of claims 1 and 2, **characterized in that** each effect is selected from a group comprising a swerving of said vehicle (V) and a steering wheel stroke performed when said vehicle (V) is located at least partially on or near a line delimiting said traffic lane.

4. A device according to any of claims 1 to 3, **characterized in that** said processing means (MT) are arranged to estimate each overall alertness level by accumulating estimates of said overall alertness level concerned during successive subintervals of said selected time interval.

5. A device according to any of claims 1 to 4, **characterised in that** said processing means (MT) is arranged to estimate each global alertness level in accordance with a correspondence table establishing a correspondence between effect levels, cause levels and global alertness levels.

6. Device according to any of the claims 1 to 5, **characterised in that** it comprises at least one digital camera (C2) suitable for acquiring said second image data, and/or at least one digital camera (C1) suitable for acquiring said first data.

7. Vehicle (V), **characterised in that** it comprises an aid device (DA) according to one of the preceding claims.
